# EUROPÄISCHE PATENTSCHRIFT

(11) **EP 0 762 246 B1**
(45) Veröffentlichungstag und Bekanntmachung des Hinweises auf die Patenterteilung: **08.05.2002**
(21) Anmeldenummer: 96108989.3
(22) Anmeldetag: 05.06.1996
(51) Int. Cl.: G05B 19/042

(54) **Verfahren und Vorrichtung zur Überprüfung einer Steuereinheit**
Method and device for checking a control unit
Procédé et dispositif de vérification d'une unité de commande

(30) Priorität: 06.09.1995 DE 19532882
(43) Veröffentlichungstag der Anmeldung: 12.03.1997
(73) Patentinhaber: ROBERT BOSCH GMBH, 70442 Stuttgart (DE)
(72) Erfinder: Gagea, Leonard, Ing., 1180 Wien (AT); Poinstingl, Peter, Ing., 3910 Zwettl (AT)

(56) Entgegenhaltungen:
- EP-A- 0 332 727
- DE-A- 3 005 872
- DE-A- 4 024 287
- US-A- 4 155 115
- US-A- 4 275 464
- US-A- 4 627 056

## Beschreibung

### Stand der Technik

Die Erfindung betrifft ein Verfahren und eine Vorrichtung zur Überprüfung einer Steuereinheit gemäß den Oberbegriffen der unabhängigen Ansprüche.

Ein solches Verfahren und eine solche Vorrichtung zur Überprüfung einer Steuereinheit ist aus der EP 0 332 727 bekannt. Dort wird eine Vorrichtung zur Prüfung eines elektronischen Steuersystems beschrieben. Eine Prüfeinheit wird mittels einer Steckverbindung mit allen Ein- und Ausgängen des Steuergeräts verbunden. Das Prüfgerät gibt Daten über die Eingangsleitungen des Steuergeräts an den Mikroprozessor und vergleicht diese mit den über die Ausgänge abgegebenen Signalen des Mikroprozessors. Ausgehend von dem Vergleich der abgegebenen und der empfangenen Signale erkennt das Prüfgerät, ob das Steuergerät ordnungsgemäß arbeitet. Nachteilig bei dieser Vorgehensweise ist es, daß ein sehr aufwendiges Prüfgerät erforderlich ist. Des weiteren muß für jeden Typ von Steuergerät ein separates Prüfgerät entwickelt werden.

### Aufgabe der Erfindung

Der Erfindung liegt die Aufgabe zugrunde, bei einem Verfahren und einer Vorrichtung zur Überprüfung einer Steuereinheit der eingangs genannten Art ein möglichst einfaches und kostengünstiges Verfahren und Vorrichtung bereitzustellen. Diese Aufgabe wird durch die in den unabhängigen Ansprüchen gekennzeichneten Merkmale gelöst.

### Vorteile der Erfindung

Mit dem erfindungsgemäßen Verfahren und der erfindungsgemäßen Vorrichtung ist eine einfache und schnelle Überprüfung von Steuereinheiten gewährleistet. Vorteilhafte und zweckmäßige Ausgestaltungen und Weiterbildungen der Erfindung sind in den Unteransprüchen gekennzeichnet.

### Zeichnung

Die Erfindung wird nachstehend anhand der in der Zeichnung dargestellten Ausführungsformen erläutert. Es zeigt Figur 1 eine vereinfachte Darstellung der Steuereinheit, Figur 2 eine vereinfachte Darstellung der Steuereinheit und des Prüfmittels, Figur 3 ein Flußdiagramm des erfindungsgemäßen Verfahrens und Figur 4 eine weitere Ausführungsform der Steuereinheit und des Prüfmittels.

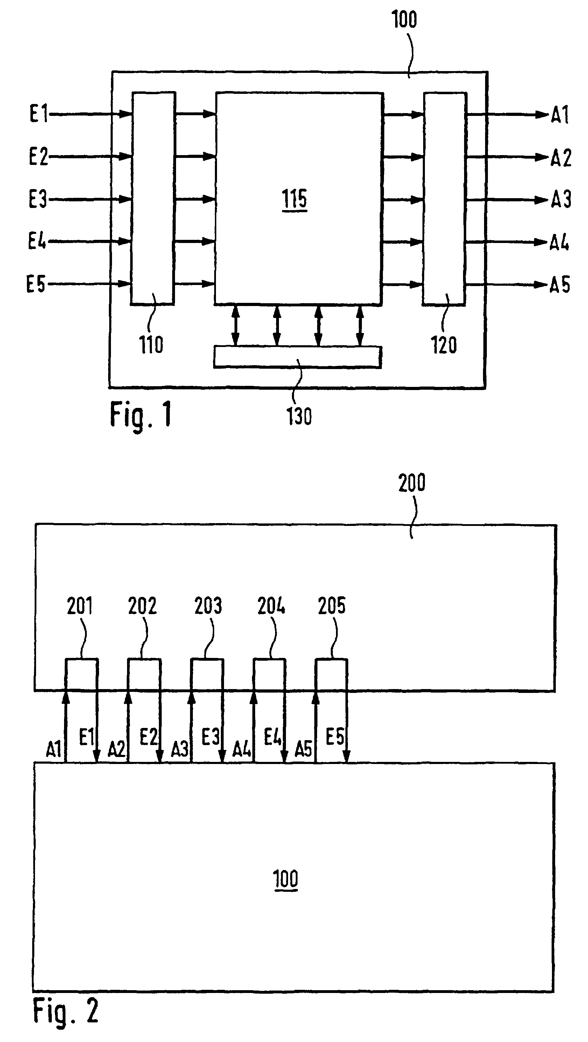

In Figur 1 ist die erfindungsgemäße Vorrichtung als Blockdiagramm dargestellt. Mit 100 ist eine Steuereinheit bezeichnet. Diese Steuereinheit 100 umfaßt im Wesentlichen einen Mikroprozessor 115 der von einer Eingangsschnittstelle 110 mit verschiedenen Signalen beaufschlagt wird und der wiederum eine Ausgangsschnittstelle 120 mit verschiedenen Ausgangssignalen beaufschlagt. Die Eingangsschnittstelle 110 verarbeitet die Eingangssignale die der Steuereinheit 100 über die Eingänge E1, E2, E3, E4 und E5 zugeleitet werden. Die Ausgangsschnittstelle 120 gibt über die Ausgänge A1, A2, A3, A4 und A5 Signale nach außen ab. Des weiteren steht der Mikroprozessor 115 mit einem Speicher 130 in Verbindung.

Die Steuereinheit 100 kann noch weitere Elemente, die nicht dargestellt sind, umfassen. Die Anzahl der Eingänge und der Ausgänge ist nur beispielhaft gewählt. In der Regel umfaßt die Steuereinheit 100 eine größere Anzahl von Ein- und Ausgängen.

Solche Steuereinheiten 100 werden beispielsweise zur Steuerung von Brennkraftmaschinen eingesetzt. In diesem Fall stehen die Eingänge mit verschiedenen Sensoren, die verschiedene Betriebszustände erfassen sowie mit weiteren Steuereinheiten in Verbindung. Die Ausgänge stehen mit verschiedenen Stellern beispielsweise zur Steuerung der einzuspritzenden Kraftstoffmenge sowie anderen Steuereinheiten in Verbindung.

Die Eingangssignale gelangen über die Eingänge E1 bis E5 zur Eingangsschnittstelle 110 die diese Daten filtert und gegebenenfalls aufbereitet. Der Mikroprozessor 115 berechnet ausgehend von diesen erfaßten Signalen und den im Speicher 130 abgelegten Programm bzw. weiteren Daten Ansteuersignale zur Beaufschlagung der Steller. Die Ausgangssignale dienen beispielsweise zur Beeinflussung der einzuspritzenden Kraftstoffmenge, des Einspritzbeginns bzw. des Zündzeitpunkts bei fremdgezündeten Brennkraftmaschinen.

Die Ansteuersignale gelangen über die Ausgangsschnittstelle 120 zu den Ausgängen. In der Ausgangsschnittstelle werden beispielsweise die Daten von digitalen in analoge Signale umgewandelt.

Es kann nun der Fall eintreten, daß bedingt durch Fehler einzelne Leitungen unterbrochen sind bzw. daß zwei oder mehr Leitungen untereinander in Kontakt stehen. Diese Fehler treten zwischen den Eingängen und der Eingangsschnittstelle, zwischen der Eingangsschnittstelle und dem Mikroprozessor, zwischen dem Mikroprozessor 115 und der Ausgangsschnittstelle 120 sowie zwischen der Ausgangsschnittstelle 120 und den Ausgängen auf.

Um solche Fehler erkennen zu können ist eine Prüfung der Steuereinheit 115 erforderlich. Erfindungsgemäß ist vorgesehen, daß die Steuereinheit mit einem Prüfmittel 200 verbunden ist. In Figur 2 ist dies dargestellt. Mit 100 ist die Steuereinheit und mit 200 ist das Prüfmittel bezeichnet. Die Eingänge und die Ausgänge der Steuereinheit 100 stehen jeweils mit einem Anschluß des Prüfmittels 200 in Verbindung. Jeweils zwei Anschlüsse des Prüfmittels sind mit Leitungen 201, 202, 203, 204 und 205 miteinander verbunden.

Erfindungsgemäß ist vorgesehen daß jeweils genau ein Ausgang und ein Eingang der Steuereinheit 100 mit einer Leitung 201 bis 205 verbunden werden. Bei der in Figur 2 dargestellten Ausführungsform handelt es sich bei dem Prüfmittel 200 um einen einfachen Stecker, der jeweils genau einen Ausgang mit genau einem Eingang der Steuereinheit 100 verbindet. Das Prüfmittel 200 ordnet jedem Ausgang der Steuereinheit 100 genau einen Eingang der Steuereinheit 100 zu.

Zur Überprüfung wird wie folgt vorgegangen. Der Mikrocontroller 115 beaufschlagt genau einen Ausgang mit einem Signal. Anschließend wird die Wirkung auf alle Eingänge kontrolliert. Eine Änderung eines Ausgangs darf nur eine Änderung genau eines Eingangs zur Folge haben. Ändert sich das Eingangssignal mehrerer Eingänge oder ein Eingang reagiert auf zwei Ausgänge, so liegt ein Fehler vor.

Beispielsweise kann ein Kurzschluß zwischen zwei Eingängen vorliegen. Dies hat eine Doppelreaktion zur Folge, d.h. bei zwei Eingängen erfolgt eine Pegeländerung die von einer Änderung eines Ausgangs verursacht wird. Eine entsprechende Reaktion tritt auf, wenn zwei Ausgänge einen Kurzschluß aufweisen, d.h. daß zwei Ausgänge miteinander verbunden sind. Dies bewirkt, daß für zwei Leitungen ein Signal zum Prüfmittel gelangt und über zwei Eingänge wieder eingelesen wird.

Das Ausgeben und Einlesen der Signale über die Ein- und Ausgänge erfolgt durch den Mikroprozessor 115. Die Überprüfung anhand der eingelesenen Signale auf Fehler erfolgt ebenfalls durch den Mikroprozessor. Vorteilhaft bei dieser Vorgehensweise ist, daß lediglich ein einfacher Stecker, der jeweils einen Ausgang mit jeweils einem Eingang verbindet, sowie eine einfache Prüfsoftware erforderlich ist. Die Prüfsoftware ist dabei in der Steuereinheit in einem Speicher, beispielsweise dem Speicher 130 abgelegt.

Besonders vorteilhaft ist es, daß es nicht erforderlich ist, daß bei der Prüfung externe Bauelemente beispielsweise Speicher, Steller und Sensoren angeschlossen sind. So kann ein erkannter Fehler der Steuereinheit 100 zugeordnet werden. Ein ordnungsgemäßer Betrieb muß nicht vorausgesetzt werden.

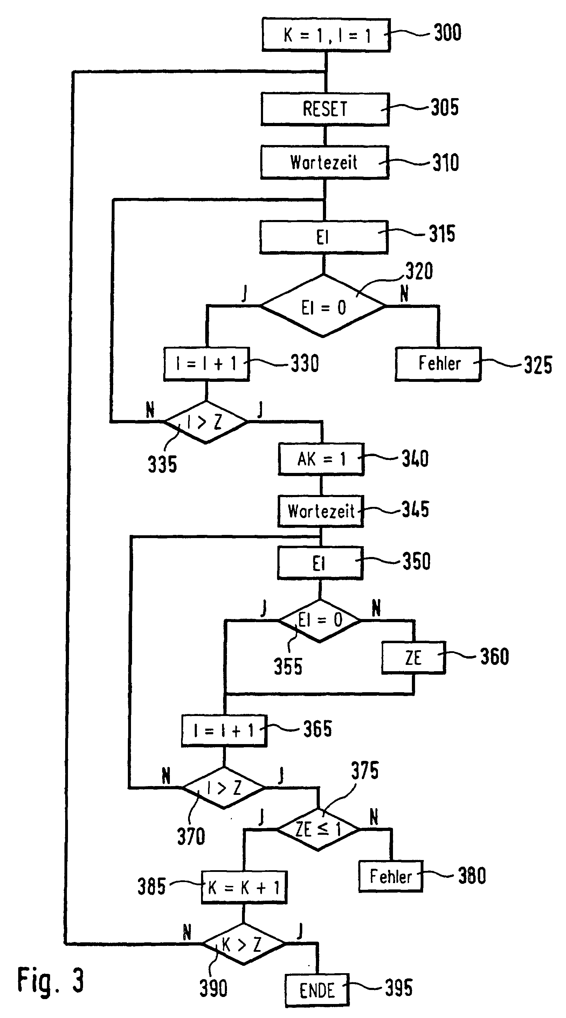

Eine mögliche Vorgehensweise zur Überprüfung ist in Figur 3 anhand eines Flußdiagrammes dargestellt. In einem ersten Schritt 300 werden die Zähler K und I auf 1 gesetzt. Im Schritt 305 erfolgt ein Reset aller Ausgänge A1 bis A5. Dies bedeutet alle Ausgänge A1 bis A5 werden mit einem Signal das einen niederen Pegel annimmt beaufschlagt.

Im anschließenden Schritt 310 wird eine Wartezeit abgewartet. Nach Ablauf der Wartezeit wird in Schritt 315 der Eingang E(I) eingelesen. Die Abfrage 320 überprüft ob der Eingang E(I) ebenfalls einen niederen Pegel 0 aufweist. Ist dies der Fall so wird im Schritt 330 der Zähler I um 1 erhöht. Die Abfrage 335 überprüft, ob der Zähler I größer als Z1 ist. Z1 entspricht der Anzahl der Eingänge. Ist dies nicht der Fall, so erfolgt erneut Schritt 315 und der nächste Eingang wird eingelesen.

Erkennt die Abfrage 320 daß einer der Eingänge einen erhöhten Pegel aufweist, wird in Schritt 325 auf Fehler erkannt und ein entsprechendes Fehlerbit gesetzt. Erkannte die Abfrage 335 daß alle Eingänge gelesen wurden, so folgt Schritt 340. In ihm wird der Ausgang A(K) mit einem hohen Pegel beaufschlagt und der Zähler ZE auf Null gesetzt. Ferner wird der Zähler I erneut auf 1 zurück gesetzt. Nach Ablauf der Wartezeit im Schritt 345 wird in Schritt 350 der Eingang E(I) eingelesen. Die Abfrage 355 überprüft ob der Eingang E(I) einen niederen oder einen hohen Pegel aufweist. Liegt an dem Eingang E(I) ein hoher Pegel an, so wird in Schritt 365 der Zähler I um 1 erhöht.

Die Abfrage 370 überprüft wiederum ob alle Eingänge E(I) eingelesen wurden d.h. ob der Zählerinhalt I größer als die Zahl Z1 der Eingänge ist. Ist dies nicht der Fall so wird erneut Schritt 350 abgearbeitet. Erkennt die Abfrage 355, daß einer der Eingänge E(I) einen hohen Pegel aufweist, so wird in Schritt 360 ein Zähler ZE um 1 erhöht.

Erfindungsgemäß ist vorgesehen, daß jeweils nur ein Ausgang mit einem Signal beaufschlagt wird. Das heißt, ein Ausgang wird mit einem hohen Pegel beaufschlagt. Anschließend werden alle Eingänge überprüft, ob ein Signal anliegt.

Erkennt die Abfrage 370, daß alle Eingänge eingelesen wurden, so erfolgt die Abfrage 375, die überprüft, ob der Inhalt des Zählers ZE kleiner oder gleich 1 ist. Ist dies nicht der Fall, so wird in Schritt 380 auf Fehler erkannt. Die Abfrage 375 überprüft ob eine Doppelreaktion stattgefunden hat. Das heißt, sie überprüft, ob ein Ausgang auf mehrere Eingänge einwirkt.

Ein fehlerfreier Zustand wird nur dann erkannt, wenn lediglich genau an einem Eingang ein Signal anliegt. Ein Fehler wird erkannt, wenn an zwei Eingängen ein Signal anliegt, des weiteren wird ein Fehler erkannt, wenn an keinem Eingang ein Signal anliegt.

Ist dies nicht der Fall, so wird in Schritt 385 der Zähler K um 1 erhöht. Abfrage 390 ob K größer als die Zahl Z2 der Ausgänge ist. Ist dies nicht der Fall so erfolgt erneut Schritt 305. Ist dies der Fall so endet das Prüfprogramm mit Schritt 395.

Die Schritte 350, 355, 365 und 370 bewirken, daß alle Eingänge nacheinander überprüft werden, ob ein Signal anliegt. Die Schritte 375, 385 und 390 bewirken, daß alle Ausgänge zeitlich nacheinander mit einem Signal beaufschlagt werden. Erfindungsgemäß ist vorgesehen, daß ein Fehler erkannt wird, wenn an einem Eingang mehr als ein Signal anliegt.

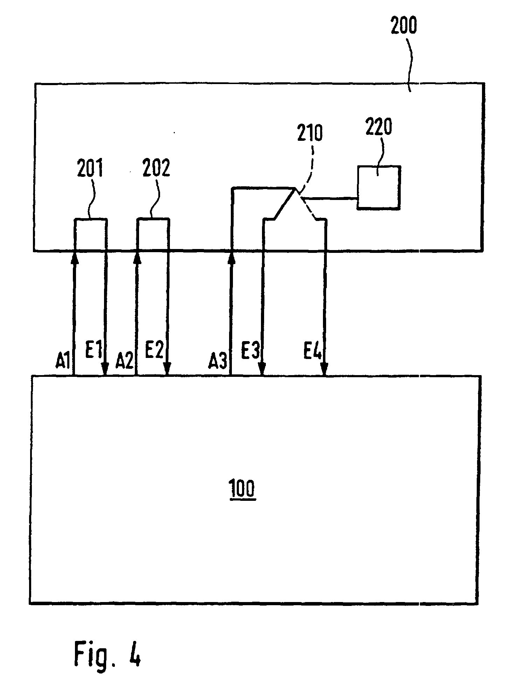

Die bisher beschriebene Vorgehensweise ist nur dann einsetzbar, wenn die Anzahl der Eingänge und die Anzahl der Ausgänge der Steuereinheit 100 gleich ist. In der Regel wird dies nicht der Fall sein, d.h. die Anzahl der Ein- und Ausgänge sind verschieden. In diesem Fall ist eine weitere Ausgestaltung Erfindung gemäß Figur 4 vorgesehen.

Bei der in Figur 4 dargestellten Ausführungsform umfaßt die Steuereinheit 3 Ausgänge A1, A2 und A3 sowie 4 Eingänge E1, E2, E3 und E4. Die Eingänge A1 und A1 sind mit der Leitung 201, der Ausgang A2 und E2 mit der Leitung 202 verbunden. Der Ausgang A3 steht über ein Schaltmittel wahlweise mit dem Eingang E3 bzw. E4 in Verbindung. Das Schaltmittel 210 wird von einer Steuerung 220 angesteuert. Erfindungsgemäß ist nun vorgesehen, daß das Schaltmittel zuerst eine durchgezogen eingezeichnete Position einnimmt und das Prüfverfahren gemäß Figur 3 abläuft. Anschließend steuert die Steuerung 220 das Schaltmittel in seine zweite Position, die gestrichelt eingezeichnet ist, und der Ausgang A3 wird mit dem Eingang E4 verbunden. Nun läuft das Prüfverfahren gemäß Figur 3 nochmals ab.

Im einfachsten Ausführungsbeispiel ist das Schaltmittel 210 als externer Schalter realisiert der von einer Bedienperson betätigt werden muß. Bei einer weiteren Ausgestaltung wird das Schaltmittel bzw. die Steuerung 220 von einem Signal der Steuereinheit angesteuert.

Bei der beschriebenen Ausführungsform wird vorausgesetzt, daß ein niederer Signalpegel an einem der Ausgänge auch einen niederen Signalpegel am zugeordneten Eingang zur Folge hat. Dies ist häufig nicht der Fall. Enthält beispielsweise die Eingangsschnittstelle oder die Ausgangsschnittstelle einen Invertierer, so hat ein Ausgangssignal mit: hohem Pegel zur Folge, daß der Mikroprozessor ein Signal mit niederem Pegel einliest.

In diesem Fall ist eine verbesserte Ausführungsform sinnvoll. Bei dieser Ausführungsform werden im Schritt 305 die Ausgänge mit einem definierten Signal beaufschlagt. Die Abfrage 320 überprüft, ob nach Ablauf der Wartezeit alle Eingänge einen erwarteten Pegel annehmen. Ist dies nicht der Fall wird auf Fehler erkannt.

Anschließend wird in Schritt 340 bei einem Ausgang der Pegel verändert. Nach Ablauf 345 einer Wartezeit werden alle Eingänge eingelesen und es wird in der Abfrage 355 überprüft, ob sich der Pegel eines Eingangs verändert hat. Der Zähler ZE zählt im Schritt 360 die Zahl der Eingänge bei denen eine Änderung auftritt. Erkennt die Abfrage 375, daß mehr als einem Eingang eine Änderung des Pegels erfolgte, so wird in Schritt 380 auf Fehler erkannt.

Nacheinander werden die Pegel aller Ausgänge verändert und jeweils die Reaktion aller Eingänge überprüft.

## Patentansprüche

1. Verfahren zur Überprüfung einer Steuereinheit (100), die einen.Mikroprozessor (115) und wenigstens zwei Ausgänge (A1, A2) und Eingänge (E1, E2) aufweist, wobei der Mikroprozessor (115) wenigstens einen Ausgang (A1, A2) mit einem Prüfsignal beaufschlagt, **dadurch gekennzeichnet, daß** mittels eines Prüfmittels (200) jedem Ausgang (A1, A2) genau ein Eingang (E1, E2) oder jedem Eingang (E1, E2) genau ein Ausgang (A1, A2) zugeordnet ist, wobei der Mikroprozessor (115) über wenigstens einen Eingang (E1, E2) das Prüfsignal einliest und einen fehlerfreien Betrieb erkennt, wenn eine Änderung des Prüfsignals bei einem Ausgang (A1, A2) nur eine Änderung genau eines Eingangs (E1, E2) zur Folge hat.

2. Verfahren nach Anspruch 1, **dadurch gekennzeichnet, daß** jeweils nur ein Ausgang (A1, A2) mit einem Signal beaufschlagt wird.

3. Verfahren nach Anspruch 1 oder 2, **dadurch gekennzeichnet, daß** an allen Eingängen (E1, E2) überprüft wird, ob ein Signal anliegt.

4. Verfahren nach einem der vorhergehenden Ansprüche, **dadurch gekennzeichnet, daß** ein Fehler erkannt wird, wenn gleichzeitig an zwei Eingängen (E1, E2) ein Signal anliegt.

5. Verfahren nach einem der vorhergehenden Ansprüche, **dadurch gekennzeichnet, daß** ein Fehler erkannt wird, wenn an keinem Eingang (E1, E2) ein Signal anliegt.

6. Verfahren nach einem der Vorhergehenden Ansprüche, **dadurch gekennzeichnet, daß** alle Ausgänge (A1, A2) zeitlich nacheinander mit einem Signal beaufschlagt werden.

7. Verfahren nach einem der vorhergehenden Ansprüche, **dadurch gekennzeichnet, daß** ein Fehler erkannt wird, wenn an einem Eingang (E1, A2) mehr als einmal ein Signal anliegt.

8. Vorrichtung zur Überprüfung einer Steuereinheit (100), die einen Mikroprozessor (115) und wenigstens zwei Ausgänge (A1, A2) und Eingänge (E1, E2) aufweist, wobei der Mikroprozessor (115) wenigstens einen Ausgang (A1, A2) mit einem Prüfsignal beaufschlagt, **dadurch gekennzeichnet, daß** ein Prüfmittel (200) jedem Ausgang (A1, A2) genau ein Eingang (E1, E2) oder jedem Eingang (E1, E2) genau ein Ausgang (A1, A2) zuordnet, und der Mikroprozessor (115) über wenigstens einen Eingang (E1, E2) das Prüfsignal einliest und einen fehlerfreien Betrieb erkennt, wenn eine Änderung des Prüfsignals bei einem Ausgang (A1, A2) nur eine Änderung genau eines Eingangs (E1, E2) zur Folge hat.

## Claims

1. Method for checking a control unit (100) which has a microprocessor (115) and at least two outputs (A1, A2) and inputs (E1, E2), the microprocessor (115) applying a test signal to at least one output (A1, A2), **characterized in that**, by means of a test means (200), exactly one input (E1, E2) is assigned to each output (A1, A2) or exactly one output (A1, A2) is assigned to each input (E1, E2), the microprocessor (115) reading in the test signal via at least one input (E1, E2) and identifying error-free operation if a change in the test signal at an output (A1, A2) only results in a change in exactly one input (E1, E2).

2. Method according to Claim 1, **characterized in that** a signal is applied in each case only to one output (A1, A2).

3. Method according to Claim 1 or 2, **characterized in that** a check is made at all of the inputs (E1, E2) to determine whether a signal is present.

4. Method according to one of the preceding claims, **characterized in that** an error is identified if a signal is present simultaneously at two inputs (E1, E2).

5. Method according to one of the preceding claims, **characterized in that** an error is identified if a signal is not present at any input (E1, E2).

6. Method according to one of the preceding claims, **characterized in that** a signal is applied to all of the outputs (A1, A2) in temporal succession.

7. Method according to one of the preceding claims, **characterized in that** an error is identified if a signal is present at an input (E1, A2) more than once.

8. Device for checking a control unit (100) which has a microprocessor (115) and at least two outputs (A1, A2) and inputs (E1, E2), the microprocessor (115) applying a test signal to at least one output (A1, A2), **characterized in that** a test means (200) assigns exactly one input (E1, E2) to each output (A1, A2) or exactly one output (A1, A2) to each input (E1, E2), and the microprocessor (115) reads in the test signal via at least one input (E1, E2) and identifies error-free operation if a change in the test signal at an output (A1, A2) only results in a change in exactly one input (E1, E2).

## Revendications

1. Procédé de contrôle d'une unité de commande (100) comportant un microprocesseur (115) et au moins deux sorties (A1, A2) et des entrées (E1, E2), le microprocesseur (115) fournissant au moins un signal de contrôle à une sortie (A1, A2),
**caractérisé en ce qu'**
un moyen de contrôle (200) associe à chaque sortie (A1, A2) précisément une entrée (E1, E2) ou à chaque entrée (E1, E2) précisément une sortie (A1, A2), et
le microprocesseur (115) enregistre le signal de contrôle par au moins une entrée (E1, E2) et détecte un fonctionnement sans défaut, si une variation du signal de contrôle à une sortie (A1, A2) n'entraîne une variation qu'à précisément une entrée (E1, E2),

2. Procédé selon la revendication 1,
**caractérisé en ce que**
chaque fois seulement une sortie (A1, A2) est sollicitée par un signal.

3. Procédé selon l'une des revendications 1 ou 2,
**caractérisé en ce qu'**
on vérifie la présence d'un signal à toutes les entrées (E1, E2).

4. Procédé selon l'une quelconque des revendications précédentes,
**caractérisé en ce qu'**
on détecte un défaut si deux entrées (E1, E2) reçoivent simultanément un signal.

5. Procédé selon l'une quelconque des revendications précédentes,
**caractérisé en ce qu'**
on détecte un défaut si aucune entrée (E1, E2) ne reçoit un signal.

6. Procédé selon l'une quelconque des revendications précédentes,
**caractérisé en ce qu'**
on applique un signal successivement à toutes les sorties (A1, A2).

7. Procédé selon l'une quelconque des revendications précédentes,
**caractérisé en ce qu'**
on détecte un défaut si une entrée (E1, E2) reçoit un signal plus d'une fois.

8. Dispositif de contrôle d'une unité de commande (100) comprenant un microprocesseur (115) et au moins deux sorties (A1, A2) et des entrées (E1, E2), le microprocesseur (115) appliquant un signal de contrôle a au moins une sortie (A1, A2),
**caractérisé en ce qu'**
un moyen de contrôle (200) associe à chaque sortie (A1, A2) précisément une entrée (E1, E2) ou à chaque entrée (E1, E2) précisément une sortie (A1, A2), et le microprocesseur (115) enregistre le signal de contrôle par au moins une entrée (E1, E2) et détecte un fonctionnement sans défaut si une variation du signal de contrôle sur une sortie (A1, A2) n'entraîne une variation qu'à précisément une entrée (E1, E2).
